# EUROPÄISCHE PATENTSCHRIFT

(11) **EP 1 543 391 B1**
(45) Veröffentlichungstag und Bekanntmachung des Hinweises auf die Patenterteilung: **29.10.2008**
(21) Anmeldenummer: 03757811.9
(22) Anmeldetag: 09.09.2003
(51) Int. Cl.: G05B 19/05, G05B 19/042

(54) **VERFAHREN ZUR SIMULATION EINES FELDGERÄTES IN EINEM NETZWERK DER PROZESSAUTOMATISIERUNGSTECHNIK**
METHOD FOR SIMULATION OF A FIELD DEVICE IN A PROCESS AUTOMATION TECHNOLOGY NETWORK
PROCEDE DE SIMULATION D'UN APPAREIL DE CHAMP DANS UN RESEAU RELEVANT DE LA TECHNIQUE D'AUTOMATION DES PROCESSUS INDUSTRIELS

(30) Priorität: 26.09.2002 DE 10245176
(43) Veröffentlichungstag der Anmeldung: 22.06.2005
(73) Patentinhaber: Endress + Hauser Process Solutions AG, 4153 Reinach BL (CH)
(72) Erfinder: DA SILVA NETO, Eugenio Ferreira, CH-4105 Biel-Benken (CH)
(74) Vertreter: Andres, Angelika Maria
(86) Internationale Anmeldenummer: PCT/EP2003/010011
(87) Internationale Veröffentlichungsnummer: WO 2004/031874

(56) Entgegenhaltungen:
- EP-A- 0 539 313
- EP-A- 0 718 728
- DE-A- 19 543 826
- US-B- 6 095 674
- MARIO FERRARI: "emulegOS" , [Online] 21. Oktober 2001 (2001-10-21), XP002267875 Gefunden im Internet: <URL:http://web.archive.org/web/2001102123 3839/http://emulegos.sourceforge.net/> [gefunden am 2004-01-22]

## Beschreibung

Die Erfindung betrifft ein Verfahren zur Simulation eines Feldgerätes in einem Netzwerk der Prozessautomatisierungstechnik gemäß dem Oberbegriff des Anspruchs 1.

In der Prozessautomatisierungstechnik werden häufig Feldgeräte zur Steuerung von Prozessabläufen eingesetzt.

Feldgeräte zur Durchfluss-, Füllstands-, Druck-, Temperaturbestimmung etc. sind allgemein bekannt. Sie dienen zur Erfassung der entsprechenden Prozessvariablen Massen- oder Volumenfluss, Füllstand, Druck, Temperatur etc.

Diese Feldgeräte liefern jeweils Messwerte, die ein Maß für die erfasste Prozessvariable sind. Die Messwerte werden an eine Warte oder an ein Leitsystem weitergeleitet. In der Regel erfolgt die gesamte Prozesssteuerung von der Warte oder vom Leitsystem aus, wo die verschiedenen Messwerte der unterschiedlichen Feldgeräte ausgewertet und aufgrund der Auswertung Steuersignale für Feldgeräte erzeugt werden, die den Prozessablauf beeinflussen (z.B. Aktoren, Ventile). Die Signalübertragung zwischen den Feldgeräten und der Warte bzw. dem Leitsystem erfolgt nach den bekannten Standards (Profibus®, Foundation Fieldbus® oder CAN-Bus® etc.). Neben den reinen Messwerten liefern moderne Feldgeräte auch Diagnoseinformationen und Wartungsinformationen.

Vielfach ist der Feldbus auch mit einem übergeordneten Firmennetzwerk verbunden.

Für spezielle Standardfunktionen eines Feldgerätes stehen sogenannte Funktionsblöcke zur Verfügung, die bestimmte Funktionen des Feldgerätes beschreiben und den Zugriff auf diese Funktionen festlegen.

Jeder Funktionsblock steht für eine bestimmte Aufgabe des Feldgerätes und kann beliebig mit anderen Funktionsblöcken kombiniert werden.

In den Foundation Fieldbus-Spezifikafionen, die öffentlich zugänglich sind, sind verschiedene Standard-Funktionsblöcke spezifiziert.

Typische Funktionsblöcke für Feldgeräte sind "Analog Input" (Analogeingang) oder Diskret Input (Digitaleingang), für komplexe Regelaufgaben existieren Funktionsblöcke wie PD-Regler oder PDI-Regler.

Verfügt ein Feldgerät über einen solchen Funktionsblock, so kann es eine Prozessvariable selbständig regeln. Dadurch können Automatisierungsaufgaben vom Leitsystem in die Feldebene verlagert werden. Bei einer komplexen Kontrollstrategie werden eine Vielzahl von Funktionsblöcken miteinander verschaltet. Beispiel hierfür ist eine Kaskadenregelung.

Aus der DE 195 43 826 A1 ist eine separate Simulatoreinheit zum Simulieren einer Peripherieeinheit einer modular aufgebauten speicherprogrammierbaren Steuerung bekannt geworden. Die Simulatoreinheit weist eine Busschnittstelle zum Peripheriebus und eine Ein- und Ausgabeeinheit zur Kommunikation nach außen auf. Beide sind mit einer intelligenten Einheit verbunden. Im Betrieb wertet die intelligente Einheit die über die Busschnittstelle empfangenen Signale aus und steuert hierzu korrespondierend die Ein-/Ausgabeeinheit Weiterhin fragt sie die Ein-/Ausgabeeinheit ab und steuert entsprechend die Busschnittstelle an.

Bevor ein Feldgerät eingesetzt werden kann, muss es konfiguriert und parametriert werden. Hierfür ist ein Laden der Kontrollstrategie einschließlich der Parameter in die Feldgeräte notwendig. Bekannte Applikationen mit denen eine Kontrollstrategie erzeugt werden können, ist z. B. das System Syscon 302 von der Firma SMAR. Mit einem derartigen Programm kann jedoch nur das korrekte Verschalten der Funktionsblöcke sowie der einwandfreie Ablauf der Regelkreise getestet werden. Das System Syscon ist in der US-PS 6,095,674 beschrieben.

Ein Problem hierbei ist, dass nicht sichergestellt ist, dass die für ein spezielles Feldgerät vorgesehenen Funktionsblöcke auch in dieses Feldgerät geladen werden können und dort einwandfrei ablaufen, sei es, dass die Prozessorleistung bzw. der Speicherplatz nicht ausreichend ist. Dadurch können erhebliche Probleme beim Laden der Kontrollstrategie in Feldgeräte entstehen. Unter Umständen muss sogar die Automatisierungsanlage abgeschaltet werden.

Aufgabe der Erfindung ist es deshalb ein Verfahren anzugeben, das die oben genannten Nachteile nicht aufweist, das insbesondere ein einfaches Testen einer Kontrollstrategie ermöglicht. Gelöst wird diese Aufgabe durch das in Anspruch 1 angegebene Verfahren.

Die wesentliche Idee der Erfindung ist es, ein Feldgerät in einem Netzwerk der Prozessautomatisierungstechnik zu simulieren, um dadurch sicherzustellen, dass die für dieses Feldgerät vorgesehene Funktionsblöcke auch einwandfrei in diesem Feldgerät ablaufen können.

Vorteilhafte Weiterentwicklung der Erfindung sind in den Unteransprüchen angegeben.

Nachfolgend ist die Erfindung anhand eines in der Zeichnung dargestellten Ausführungsbeispiels näher erläutert.

Es zeigen:
Fig. 1 schematische Darstellung eines Netzwerks der Prozessautomatisierungstechnik;
Fig. 2 schematische Darstellung der Hardware eines Feldgerätes;
Fig. 3 schematische Darstellung der Software eines Feldgerätes;
Fig. 4 schematische Darstellung eines virtuellen Feldgerätes;

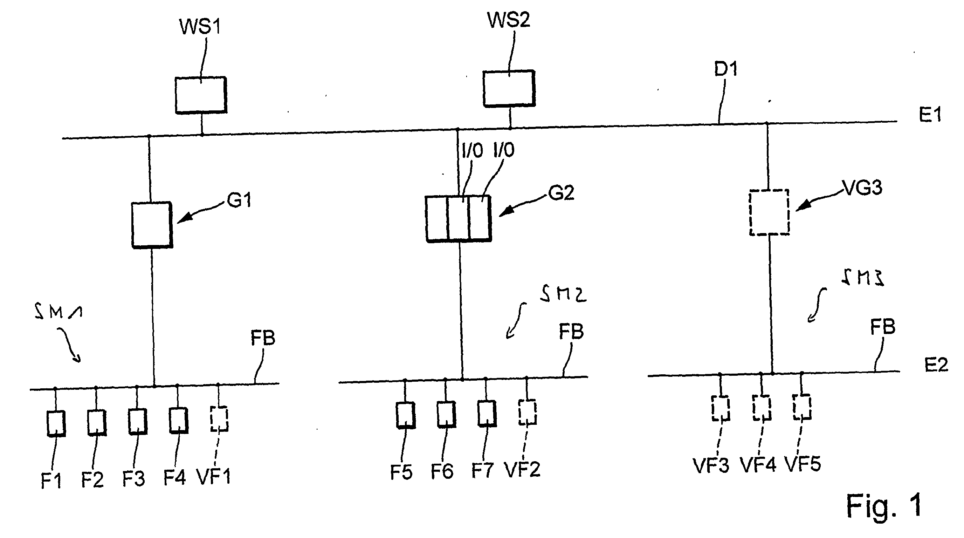

In Fig. 1 ist ein Netzwerk der Prozessautomatisierungstechnik näher dargestellt. An einem Datenbus D1 sind mehrere Workstations (Arbeitsstationen) WS1, WS2 und mehrere Gateways G1, G2 und VG3 angeschlossen. Das Gateway G1 ist mit einem Feldbussegment SM1 verbunden. Das Feldbussegment SM1 besteht im wesentlichen aus mehreren Feldgeräten F1, F2, F3, F4 und einem virtuellen Feldgerät VF1. Das Gateway G2 ist mit einem Feldbussegment SM2 verbunden, das im wesentlichen aus den Feldgeräten F5, F6, F7 und einem virtuellen Feldgerät VF2 besteht. Das Gateway G2 weist darüber hinaus mehrere I/O-Anschlüsse I/O auf. Das virtuelle Gateway VG3 ist mit einem Feldbussegment SM3 verbunden, das im wesentlich aus den virtuellen Feldgeräten VF3, VF4, VF5 gebildet wird. Von den Workstations WS1, WS2 ist die Konfigurierung und Parametrierung der Feldgeräte F1 bis F10 möglich. Hierzu ist auf den Workstations WS1 bzw. WS2 ein entsprechendes Bedienwerkzeug installiert. Der Datenbus D1 in der Leitebene E1 arbeitet nach dem High-Speed-Internet Standard HSE. Die Feldbusse FB in der Feldebene (Feldbussegmente SM1, SM2, SM3) arbeiten erheblich langsamer.

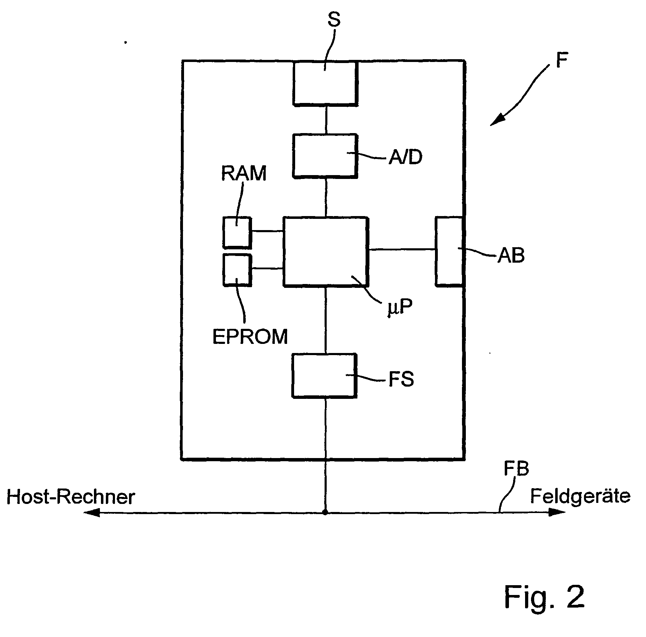

In Fig. 2 ist die Hardware eines Feldgerätes F näher dargestellt. Ein Sensoraufnehmer S ist über einen Analog-Digitalwandler A/D mit einem Mikroprozessor µP verbunden. Der Mikroprozessor µP ist über eine Feldbusschnittstelle FS mit dem Feldbus FB verbunden. Weiterhin ist der Mikroprozessor µP mit zwei Speichern, einem RAM- und einem EPROM-Speicher sowie einer Anzeige/ Bedieneinheit AB verbunden.

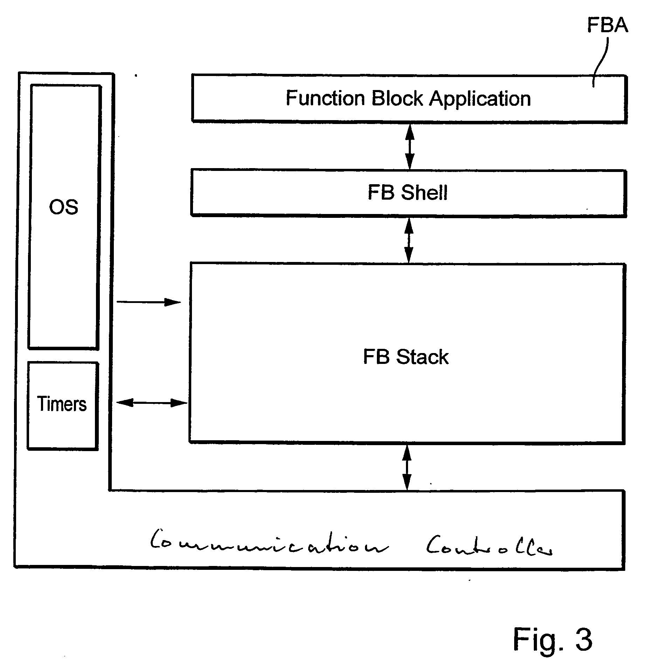

Fig. 3 zeigt in schematischer Darstellung die Softwareblöcke eines Feldgerätes. Eine Function Block Application FBA ist über eine Function Block Shell FB-SHELL mit einem Function Block Stack FB-STACK verbunden. Diese Blöcke sind von einem Hardware-abhängigen Betriebssystem (Operation System) OS, Timern und einem Controller für die Kommunikation Communication Controller umgeben.

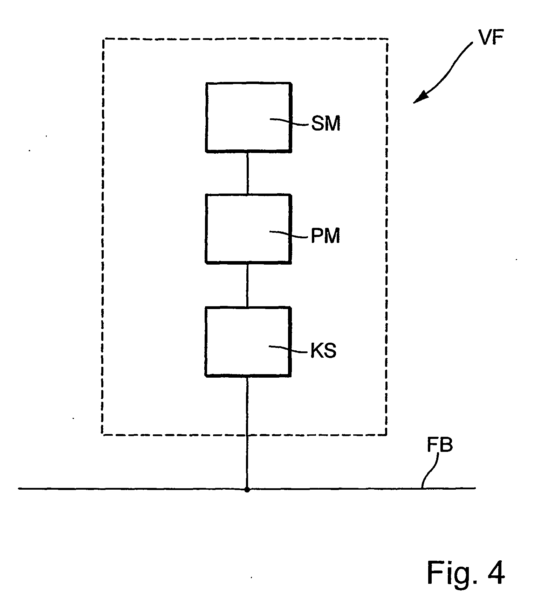

Fig. 4 zeigt ein virtuelles Feldgerät VF, das ein Speichermanagement SM, ein Prozessormanagement PM und eine Kommunikationsschnittstelle KS aufweist.

Nachfolgend ist das erfindungsgemäße Verfahren näher erläutert.

Auf einer der Workstations WS1 bzw. WS2 ist ein Bedienwerkzeug für die Feldgeräte F1 bis F7 installiert. Mit diesem Bedienwerkzeug können die Feldgeräte F1 bis F7 konfiguriert und parametriert werden bzw. es kann mit diesem Bedienwerkzeug auch eine Kontrollstrategie erstellt werden. Neben den realen physikalisch an dem Feldbus FB angeschlossenen Feldgeräten F1 bis F7 kann mit dem Bedienwerkzeug auch die Bedienung der virtuellen Feldgeräte VF1 bis VF5 erfolgen. Die virtuellen Feldgeräte VF1 bis VF5 bestehen ausschließlich aus Software-Code, der auf einer der Komponenten des Netzwerks (WS1, WS2, G1, G2, F1 bis F7) ausgeführt wird. Somit wird für das Bedientool ein Feldgerät einfach simuliert. Um eine möglichst exakte Übereinstimmung zwischen einem virtuellen Feldgerät VF und einem realen Feldgerät F zu erzielen, weist das virtuelle Feldgerät VF ein Speichermanagement SM und einen Prozessormanagement PM sowie eine Kommunikationsschnittstelle KS auf, wobei der verfügbare Speicherplatz über das des Speichermanagements SM und die verfügbare

Rechengeschwindigkeit bzw. die Prozessorleistung über das Prozessormanagements PM einstellbar sind. In einfacher Weise können Funktionsblöcke bzw. Konfigurierdaten zwischen dem Bedienwerkzeug und einem virtuellen Feldgerät VF als Upload bzw. Download übertragen werden.

D. h. in ein virtuelles Feldgerät VF können Funktionsblöcke geladen werden und die Konfigurierdaten des virtuellen Feldgerätes VF per Bedienwerkzeug eingestellt werden. Das virtuelle Feldgerät VF verhält sich wie ein reales Feldgerät F, das z. B. Funktionsblöcke einer Kontrollstrategie ausführt bzw. Anweisungen der im Feldgerät geladenen Firmenware ausführt.

Mit Hilfe derartiger virtueller Feldgeräte kann eine Kontrollstrategie in einfacher Weise getestet werden. Hierzu werden die realen Feldgeräte, die an einen Feldbus angeschossen sind, als virtuelle Feldgeräte nachgebildet. Der Speicherplatz sowie die Rechenleistung des jeweiligen Mikroprozessors werden entsprechend nachgebildet. Nach dem erstellen einer Kontrollstrategie wird die Kontrollstrategie auf die virtuellen Feldgeräte übertragen und entsprechend getestet. Nach dem Übertragen, ist leicht festzustellen, ob der Speicherplatz bzw. die Prozessorleistung des virtuellen Feldgerätes ausreicht, um die für dieses Feldgerät vorgesehenen Aufgaben zu erfüllen.

Ist ersichtlich, dass die Kontrollstrategie für die virtuellen Feldgeräte geeignet ist, wird die Kontrollstrategie auf die realen Feldgeräte übertragen. Nach der Übertragung ist sichergestellt, dass der Speicherplatz so wie die Prozessorleistung des jeweiligen realen Feldgerätes ausreicht um die Kontrollstrategie durchführen zu können.

Weiterhin können durch ein virtuelles Feldgerät die Funktionalität eines realen Feldgerätes erweitert werden. Dafür wird ein reales Feldgerät F mit einem virtuellen Feldgerät VF kombiniert. Das System aus realem und virtuellen Feldgerät bildet ein Kombifeldgerät, das eine eigene Geräteidentifikation und einen eigenen Gerätenamen aufweist. Denkbar ist die Funktionalität eines Feldgerätes um zusätzliche Diagnosenfunktionen bzw. zusätzliche Funktionsblöcke oder weitere Funktionsblockfähigkeiten zu erweitern.

Mit dem erfindungsgemäßen Verfahren wird die Einführung einer neuen Kontrollstrategie erheblich einfacher. Weiterhin kann mit dem erfindungsgemäßen Verfahren auch der teilweise vorgeschrieben FAT-Test (Factory Acceptance Test) vereinfacht bzw. vollständig umgangen werden.

## Patentansprüche

1. Verfahren zur Simulation eines Feldgerätes (F1,.., F7) in einem Netzwerk der Prozessautomatisierungstechnik, das eine Steuereinheit (WS1, WS2) aufweist, die über einen Feldbus (FB) mit mehreren Feldgeräten (F1, ..., F7) verbunden ist, **dadurch gekennzeichnet, dass** das Feldgerät (F1, ..., F7) als virtuelles Feldgerät (VF1, VF2, VF3, VF4, VF5) in einem Software-Code beschrieben ist, der auf einem der mit dem Feldbus (FB) verbundenen Feldgeräte (F1, ..., F7), auf einem mit dem Feldbus (FB) verbundenen Gateway (G1, G2) oder auf der Steuereinheit (WS1, WS2) abläuft, wobei der Software-Code das Verhalten und die Funktionalität des Feldgerätes (VF1, VF2, VF3, VF4, VF5) so beschreibt, dass es von einem herkömmlichen Bedienwerkzeug wie ein reales, an den Feldbus (FB) angeschlossenes Feldgerät (F1, ..., F7) bedient werden kann und dass der Speicherplatz und die Rechenleistung eines Mikroprozessors (µP) des zu simulierenden Feldgeräts (F1, ..., F7) nachgebildet wird.

2. Verfahren nach Anspruch 1, **dadurch gekennzeichnet, dass** das virtuelle Feldgerät (VF1, VF2, VF3, VF4, VF5) ein Speichermanagement (SM), ein Prozessormanagement (PM) und eine Feldbusschnittstelle (KS) aufweist.

3. Verfahren nach einem der vorhergehenden Ansprüche, **dadurch gekennzeichnet, dass** der Speicherplatz des Speichermanagements (SM) und/oder die Rechengeschwindigkeit bzw. die Prozessorperformance des Prozessormanagements (PM) eingestellt werden.

4. Verfahren nach einem der vorhergehenden Ansprüche, **dadurch gekennzeichnet, dass** das virtuelle Feldgerät (VF1, VF2, VF3, VF4, VF5) eine Function Block Application (FBA), eine Function Block (FB Shell) und einen Function Block (FB Stack) aufweist.

5. Verfahren nach einem der vorhergehenden Ansprüche, **dadurch gekennzeichnet, dass** Funktionsblöcke und/oder Konfigurierdaten zwischen Bedienwerkzeug und virtuellen Feldgerät (VF1, VF2, VF3, VF4, VF5) als Upload oder Download übertragen werden.

6. Verfahren nach einem der vorhergehenden Ansprüche, **dadurch gekennzeichnet, dass** das virtuelle Feldgerät (VF1, VF2, VF3, VF4, VF5) sich wie ein reales Feldgerät (F1, ..., F7) verhält, das bestimmte Aufgaben, wie z.B. Funktionsblöcke, Anweisungen aus der Firmware oder Kommunikation ausführt.

7. Verfahren nach einem der vorhergehenden Ansprüche, **dadurch gekennzeichnet, dass** die Funktionalität eines realen Feldgerätes (F1, ...., F7) durch die Kombination mit einem virtuellen Feldgerät (VF1, VF2, VF3, VF4, VF5) erweitert wird, wobei das System aus realem Feldgerät (F1, ..., F7) und virtuellem Feldgerät (VF1, VF2, VF3, VF4, VF5) ein Kombi-Feldgerät bildet, das für das Bedienwerkzeug als einheitliches Feldgerät mit einer Geräteidentifikation und einem Gerätenamen erscheint.

8. Verfahren nach Anspruch 7, **dadurch gekennzeichnet, dass** die zusätzliche Funktionalität z.B. Diagnosefunktionen, zusätzliche Funktionsblöcke oder erweiterte Funktionsblockfähigkeiten betrifft.

9. Verfahren nach einem der vorhergehenden Ansprüche, **dadurch gekennzeichnet, dass** eine Kontrollstrategie mit virtuellen Feldgeräten (VF1, VF2, VF3, VF4, VF5) und mit einem virtuellen Gateway (VG3) getestet wird und dass nach erfolgreichem Test, die Kontrollstrategie in die entsprechenden realen Feldgeräte (F1, ..., F7) geladen wird.

## Claims

1. Process for simulating a field device (F1-F7) in a process automation engineering network that exhibits a control unit (WS1, WS2) which is connected to several field devices (F1-F7) via a fieldbus (FB), **characterized in that** the field device (F1-F7) is described as a virtual field device (VF1, VF2, VF3, VF4, VF5) in a software code that runs on one of the field devices (F1-F7) connected to the fieldbus (FB), on a gateway (G1, G2) connected to the fieldbus (FB) or on the control unit (WS1, WS2), whereby the software code describes the behavior and the function of the field device (VF1, VF2, VF3, VF4, VF5) in such a way that it can be operated by a conventional operating tool like a real field device (F1-F7) connected to the fieldbus (FB) and that the disk space and the computing power of a microprocessor (µP) of the field device to be simulated (F1-F7) is emulated.

2. Process as per Claim 1, **characterized in that** the virtual field device (VF1, VF2, VF3, VF4, VF5) exhibits a space management system (SM), a processor management system (PM) and a fieldbus interface (KS).

3. Process as per one of the previous Claims, **characterized in that** the disk space of the space management system (SM) and/or the computing speed or processor performance of the processor management system (PM) are configured.

4. Process as per one of the previous Claims, **characterized in that** the virtual field device (VF1, VF2, VF3, VF4, VF5) exhibits a Function Block Application (FBA), a Function Block (FB Shell) and a Function Block (FB Stack).

5. Process as per one of the previous Claims, **characterized in that** function blocks and/or configuration data between the operating tool and the virtual field device (VF1, VF2, VF3, VF4, VF5) are transmitted as an upload or download.

6. Process as per one of the previous Claims, **characterized in that** the virtual field device (VF1, VF2, VF3, VF4, VF5) acts like a real field device (F1-F7) that executes certain tasks such as function blocks, instructions from the firmware or communication.

7. Process as per one of the previous Claims, **characterized in that** the function of a real field device (F1-F7) is extended through the combination with a virtual field device (VF1, VF2, VF3, VF4, VF5), whereby the system consisting of the real field device (F1-F7) and the virtual field device (VF1, VF2, VF3, VF4, VF5) forms a combined field device which appears as a uniform field device with a device ID and a device name for the operating tool.

8. Process as per Claim 7, **characterized in that** the additional function, e.g. diagnosis functions, affects additional function blocks or extended function block capabilities.

9. Process as per one of the previous Claims, **characterized in that** a control strategy with virtual field devices (VF1, VF2, VF3, VF4, VF5) and a virtual gateway (VG3) is tested and that the control strategy is loaded to the corresponding real field devices (F1-F7) following successful testing.

## Revendications

1. Procédé destiné à la simulation d'un appareil de terrain (F1, ..., F7) au sein d'un réseau de la technique d'automatisation des processus, qui comporte une unité de commande (WS1, WS2), laquelle est reliée par l'intermédiaire d'un bus de terrain (FB) avec plusieurs appareils de terrain (F1, ..., F7), **caractérisé en ce que** l'appareil de terrain (F1, ..., F7) est décrit dans un code logiciel en tant qu'appareil de terrain virtuel (VF1, VF2, VF3, VF4, VF5), code qui est exécuté sur l'un des appareils de terrain (F1, ..., F7) relié avec le bus de terrain (FB), sur l'une des passerelles (G1, G2) reliée avec le bus de terrain (FB) ou sur l'unité de commande (WS1, WS2), le code logiciel décrivant le comportement et la fonctionnalité de l'appareil de terrain (VF1, VF2, VF3, VF4, VF5) de telle manière qu'il puisse être utilisé par un outil de commande conventionnel comme un appareil de terrain réel (F1, ..., F7), raccordé au bus de terrain (FB), et que l'emplacement mémoire et la puissance de calcul d'un microprocesseur (µP) de l'appareil de terrain (F1, ..., F7) à simuler soit reproduits.

2. Procédé selon la revendication 1, **caractérisé en ce que** l'appareil de terrain virtuel (VF1, VF2, VF3, VF4, VF5) présente une gestion de mémoire (SM), une gestion de processeur (PM) et une interface de bus de terrain (KS).

3. Procédé selon l'une des revendications précédentes, **caractérisé en ce que** l'emplacement mémoire de la gestion de mémoire (SM) et / ou la vitesse de calcul ou la performance du processeur de la gestion de processeur sont configurés.

4. Procédé selon l'une des revendications précédentes, **caractérisé en ce que** l'appareil de terrain virtuel (VF1, VF2, VF3, VF4, VF5) présente un bloc "Function Block Application" (FBA), un bloc "Function Block Shell" (FB Shell) et un bloc "Function Block Stack" (FB Stack).

5. Procédé selon l'une des revendications précédentes, **caractérisé en ce que** des blocs fonctionnels et / ou des données de configuration sont transmis par téléchargement amont ou aval entre l'outil de commande et l'appareil de terrain virtuel (VF1, VF2, VF3, VF4, VF5).

6. Procédé selon l'une des revendications précédentes, **caractérisé en ce que** l'appareil de terrain virtuel (VF1, VF2, VF3, VF4, VF5) se comporte comme un appareil de terrain réel (F1, ..., F7), qui exécute des tâches déterminées, telles que blocs fonctionnels, instructions du firmware ou de communication.

7. Procédé selon l'une des revendications précédentes, **caractérisé en ce que** la fonctionnalité d'un appareil de terrain réel (F1, ..., F7) est étendue en combinaison avec un appareil de terrain virtuel (VF1, VF2, VF3, VF4, VF5), le système formant un appareil de terrain combiné composé d'un appareil de terrain réel (F1, ..., F7) et d'un appareil de terrain virtuel (VF1, VF2, VF3, VF4, VF5), qui apparaît pour l'outil de commande en tant qu'appareil de terrain uniforme, doté d'une identification d'appareil et d'un nom d'appareil.

8. Procédé selon la revendication 7, **caractérisé en ce que** la fonctionnalité supplémentaire, p. ex. les fonctions de diagnostic, concerne des blocs fonctionnels ou des capacités étendues de blocs fonctionnels supplémentaires.

9. Procédé selon l'une des revendications précédentes, **caractérisé en ce qu'**est testée une stratégie de contrôle avec des appareils de terrain virtuels (VF1, VF2, VF3, VF4, VF5) et avec une passerelle virtuelle (VG3) et, qu'après un test réussi, la stratégie de contrôle est chargée dans les appareils de terrain réels (F1, ..., F7) correspondants.
